# EUROPEAN PATENT SPECIFICATION

(11) **EP 1 204 017 B1**
(45) Date of publication and mention of the grant of the patent: **11.04.2007**
(21) Application number: 00830732.4
(22) Date of filing: 03.11.2000
(51) Int. Cl.: G06F 1/32

(54) **Device and method for selectively powering down integrated circuit blocks**
Vorrichtung und Verfahren zur selektiven Abschaltung integrierter Schaltungsblöcke
Dispositif et procédé pour désactivation selective de blocs de circuit intégré

(43) Date of publication of application: 08.05.2002
(73) Proprietor: STMicroelectronics S.r.l., 20041 Agrate Brianza (Milano) (IT)
(72) Inventor: Francis, Russell, Dursely, Glos GL11 5HN (GB); Alia, Michele, 95014 Giarre, (Catania) (IT)
(74) Representative: Botti, Mario

(56) References cited:
- US-A- 5 586 307
- US-A- 5 615 376
- US-A- 6 088 806

## Description

### Field of Application

This invention is directed toward reducing power consumption in integrated circuits, and more particularly toward reducing power consumption by switching off the system clock for portions of integrated circuits that are temporarily unnecessary. In a preferred embodiment, this invention involves a power down circuit for use in a System on Chip SOC, comprising:
a plurality of circuit blocks in the SOC, each of said circuit blocks having a local clock;
a system clock coupled to one or more of said circuit blocks and structured to act as said local clock of selected ones of said plurality of circuit blocks;
a power control manager coupled to said plurality of circuit blocks and structured to provide a signal that at least partially determines whether said system clock will act as said local clock of said plurality of circuit blocks.

### Background and Prior Art

Current trends in integrated circuit designs call for creating an entire manufactured circuit system on a single chip. These systems are termed System on Chip, or SOC. This differs from simple circuit integration in that many different types of circuits can be included on a single chip. For example, a SOC could include a computer processor, various signal processors, a large amount of memory, various clocks, power down circuits, and necessary system controllers all integrated on a single piece of silicon or integrated into a single package. This level of integration was not previously possible with prior integration techniques, and is very advantageous because useful devices can be created in very small sizes.

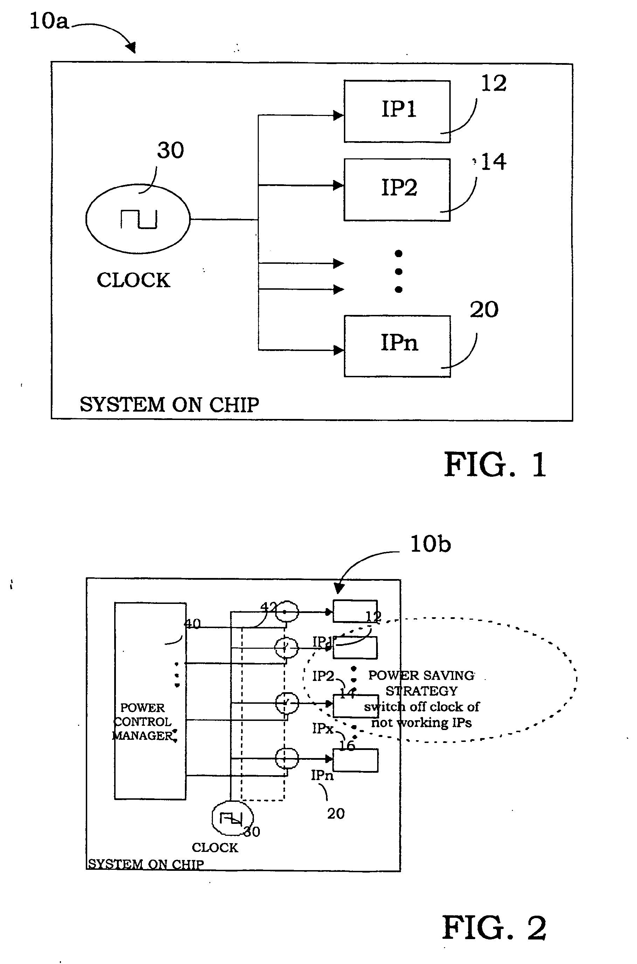

Figure 1 is a block diagram showing a SOC 10a. The SOC 10a is formed of a number of different integrated circuit portions (IPs) or blocks 12, 14, 16, 18, 20 (IC blocks 16 and 18 not shown in Figure 1). Each IP block 12, 14, etc. is tied to a system clock 30. The system clock 30 distributes its signal to each of the IP blocks 12, 14, etc. on the SOC 10a.

Important examples of devices that can include SOCs are cellular phones, palmtops, notebooks, computer components, movable equipment, communication apparatuses, biomedical apparatuses, digital cameras, MP3 players, etc. Such applications generally require a battery or some sort of power supply, presenting cost, duration, weight and dimension issues.

In order to increase the longevity of the power supplies for these devices, and especially for portable devices which require a portable power source, power consumption of the SOCs must be reduced from their current levels.

Dynamic power consumption of the different circuits blocks integrated on a single SOC is given by the formula P=fCv2, where P is Power, f is operating frequency of the circuit block, C is capacitance of all of the gates of the circuit block, and v is the power supply voltage. Therefore, in addition to reducing the power supply voltage and the overall capacitance, power of the SOC can be conserved by reducing the operating frequency of the different circuit blocks. One way to implement this is to temporarily switch off the system clock for some of the IP blocks of an SOC that were not necessary for immediate functions. Because not all of the IP blocks necessarily work contemporaneously in the SOC, some of them are unused and are eligible to be shut down.

Figure 2 shows an SOC 10b that is similar to the SOC 10a of Figure 1, but additionally includes a power control manager 40. The power control manager 40 controls a bank of switches 42 that are coupled between the system clock 30 and the various IP blocks 12, 14, etc. When the power control manager 40 determines that particular IP blocks should be shut down, for example 14 and 16, a signal is generated and fed to the bank of switches 42. The bank of switches 42 then controls the particular switch coupled to the selected IP blocks, in this example 14 and 16, and disconnects them from the system clock 30. When the selected IP blocks 14, 16 do not receive the system clock 30, they cease to function and, as seen from the above equation, draw no power because the operating frequency of the circuit is brought to 0.

Although the idea of separating the system clock from the various IP blocks is compelling, most SOCs cannot be controlled in such a manner. The implementation of such as system as shown in Figure 2 causes problems. As described above, many different types of IP blocks are contained within a particular SOC, and each of these IPs have unique requirements for when they can be safely shut down. It can therefore be difficult or impossible to establish an exact time when it is possible to switch off the clock to the IP without causing errors. In some cases, if the clock to the IP block is stopped abruptly, there is a risk of preventing a critical operation of the block. For example, an IP block could be performing a necessary communication protocol and the shutdown of the block could cause the SOC to violate the protocol. Examples of protocols that could easily be violated include memory-DMA, and master-slave blocks, among others. Additionally removing a system clock from a counter or a timing signal generator could be fatal to that particular IP block.

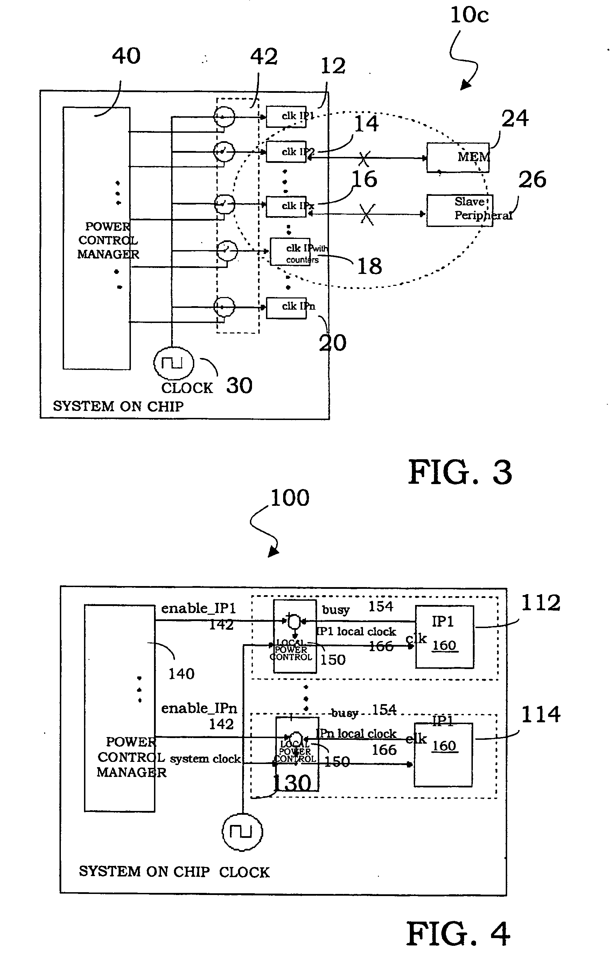

Some of these problems are illustrated in Figure 3, which shows a SOC 10c that has prevented the system clock 30 from reaching the IP blocks 14, 16 and 18, while continuing to supply the blocks 12, and 20. In each of the cases of the non-supplied blocks 14, 16, 18 there are potential problems. For instance, the IP block 14 could be in the middle of a memory DMA protocol operation with a memory unit 24 and its abrupt halt could violate that protocol. Similarly, the IP block 16 could be communicating with a slave peripheral 26, and an abrupt halt cause a malfunction or protocol violation. Additionally, the IP block 18 could contain counters which rely on the system clock 30 for accuracy. Separating the system clock 30 from the IP block 18 could seriously degrade such accuracy.

A power-down circuit to be used in a lap-top computer is described for instance in the US Patent No. 6,088,806 issued on July 11, 2000 in the name of Chee (Seiko Epson Corp.). Other clock management circuits are described in the US Patents No. 5,615,376 issued on March 25, 1997 in the name of Ranganathan (NeoMagic Corp.) and No. 5,586,307 issued on December 17, 1996 in the name of Wong et al. (Intel Corp.).

The technical problem solved by this invention is how to accurately control the shutdown of multiple disparate types of circuits that are integrated into a single system, in order to preserve the necessary function of said circuits.

### Summary of the Invention

The resolutive idea to the technical problem is achieved by performing a check to see if the IP blocks that are desired to be shutdown are currently operating or currently idle. If the blocks desired to be shutdown are currently idle, the system clock is separated from the local clock of the IP block immediately, and the local clock is shut down. If, however, the IP block is currently busy, the power manager will not separate the system clock from the local clock, and will instead wait until the IP block enters the idle state.

Based on this resolutive idea, this invention provides a selective power down circuit as previously indicated and defined in the characterizing portion of Claim 1.

Additionally, this invention provides a method for powering down individual circuit blocks as previously indicated and defined in the characterizing portion of Claim 8.

The features and advantages of the apparatus and method to power down selected circuit blocks according to the invention will be apparent by reading the following description of a preferred embodiment thereof, given by way of non-limitative example with reference to the accompanying drawings

### Brief description of the drawings

In the drawings:
Figure 1 is a block diagram of a System on Chip according to the prior art;
Figure 2 is a block diagram of a System on Chip that includes power control management according to the prior art;
Figure 3 is a block diagram of a System on Chip showing the problems associated with the System on Chip of Figure 2;
Figure 4 is a block diagram of a System on Chip including an embodiment of the invention;
Figure 5 is a flow diagram showing an implementation of the inventive method;
Figure 6 is a pseudocode listing describing the operation of the flowchart of Figure 5;
Figure 7 is a schematic diagram showing a logic circuit used to implement a local power control embodying the invention;
Figure 8 is a timing diagram showing the interaction of several signals within a System on Chip embodying the invention; and
Figure 9 is a block diagram showing an implementation of portions of a complete System on Chip embodying the invention.

### Detailed Description

Figure 4 illustrates interconnections that can be used to implement the invention. Shown is a SOC 100 including a system clock 130, a power control manager 140, and two IP blocks 112 and 114. Within the IP blocks 112, 114 are a local power control 150, and block circuitry 160, and lines connecting them as described below.

The system clock 130 is provided to the local power control 150 of each of the IP blocks 112, 114. Additionally, a clock enable line 142 couples each local power control 150 to the power control manager 140. Each local power control 150 has its own clock enable line 142 coupled to the power control manager 140. Of course any number of IP blocks 112, 114, etc. having local power control 150 could be included in the SOC 100, with only the addition of the requisite number of clock enable lines 142, and the proper connections to the system clock 130. The discussion below will be directed toward a single IP block 112, but represents the operation of all of the IP blocks 112, 114, etc. within the SOC 100.

Each local power control 150 receives three signals. The signals received by the power control 150 are from the clock enable line 142, from the system clock 130, and a "busy" signal that is received from the block circuitry 160 on a busy line 154. The signal on the busy line 154 is generated by the block logic 160 of its respective IP block 112, and is provided to its local power control 150. The signal on the busy line 154 will indicate to the local power control 150 whether the block logic 160 is in an "idle" or a "processing" state. In this case, a 1 will indicate that the block logic 160 is busy, and a 0 will indicate that the block logic is currently not in operation, or processing.

Based on states of the three signals received at the local power control 150, the local power control generates a signal. The signal generated by the local power control 150 is a local clock 166. Each of the IP blocks 112, 114, will have one local clock 166, generated by its local power control, which provides the clock signal for the respective IP block. If there is a clock signal on the local clock 166, the block logic 160 will operate. If there is no clock signal on the local clock 166, the block logic 160 will not operate. In this way, the SOC 100 can selectively disconnect IP blocks 112, 114 that are not necessary for present functions of the SOC 110. Doing this lowers overall power consumed by the SOC, because an IP block 112 draws no power if it has no local clock signal.

In operation, the local power control 150 for the IP block 112 receives a "clock enable" signal on the clock enable line 142. A signal of either 0 or 1 is always present on this enable line 142. Normally, this signal will be 1 when the IP block 112 is to be provided the clock signal 130 as the local clock signal 166, and will be a 0 when the IP block is not to receive the local clock signal, if possible. These signals could be reversed, of course, with a necessary change in the circuitry implementing the local power control 150, and such a change is within the scope of one skilled in the art. For purposes of this description, a 1 signal on the clock enable line 142 will indicate that the IP block 112 should be operating normally, and a 0 signal on the clock enable line 142 will indicate that the IP block 112 should be shutdown, if possible.

When the power control manager 140 determines that the IP block 112 should be shut down, it puts a 0 signal on the clock enable line 142 that is coupled to the local power control 150. The local power control 150 will then determine which state, busy or idle, that the block logic 160 is in. If the block logic is currently idle, the local power control immediately separates the system clock signal 130 from the local clock signal 166, and thereby prevents the IP block 112 from having a local clock signal. As discussed above, with no local clock signal, the IP block 112 cannot operate and draws no power. If, instead, the block logic 160 is currently busy, the local power control 150 continues to provide the system clock signal 130 as the local clock 166, thereby allowing the block logic to continue any operations. Once the block logic 160 has completed its operations and puts an idle signal (0) on the busy line 154, the local power control 150 will then disconnect the system clock signal 130 and effectively shutdown the IP block 112, as long as the shutdown signal (0) remains on the clock enable line 142.

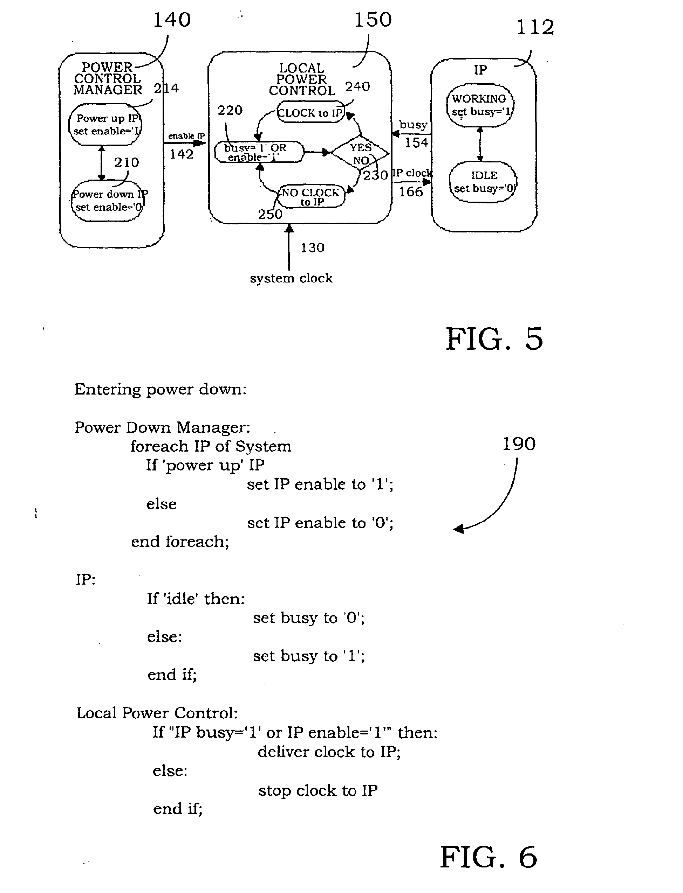

Figures 5 and 6 are a flowchart and pseudocode, respectively, explaining the operation of an implementation of the invention. In Figure 5, if the power control manager 140 desires the IP block 112 to stop drawing power, it issues a 0 on the clock enable line 142 in a step 210, otherwise it issues a 1 in a step 214. The local power control 150 receives this signal from the clock enable line 142 at a step 220 and performs a check in a step 230. The check 230 determines if either the signal sent from the power control manager 140 on the clock enable line 142, or the signal on the busy line 154 is a 1. A 1 signal on the clock enable line 142 indicates that the power control manager 140 desires the IP block 112 to remain operating, and a 1 signal on the busy line 154 indicates that the block logic 160 of the IP block 112 is in fact operating. If either of these conditions are true (1), the local power control 150 will pass the system clock 130 to the IP block 112 as its local clock 166 in a step 240. If neither of these conditions are true, meaning that the power control manager 140 desires that the IP block 112 be shut down (0 on the clock enable line 142) and the block logic 160 of the IP block 112 is in fact idle (0 on the busy line 154), then the local power control 150 separates the system clock 130 from the local clock 166, and provides no clock signal on the local clock 166. Pseudocode 190 of Figure 6 succinctly explains the above paragraph.

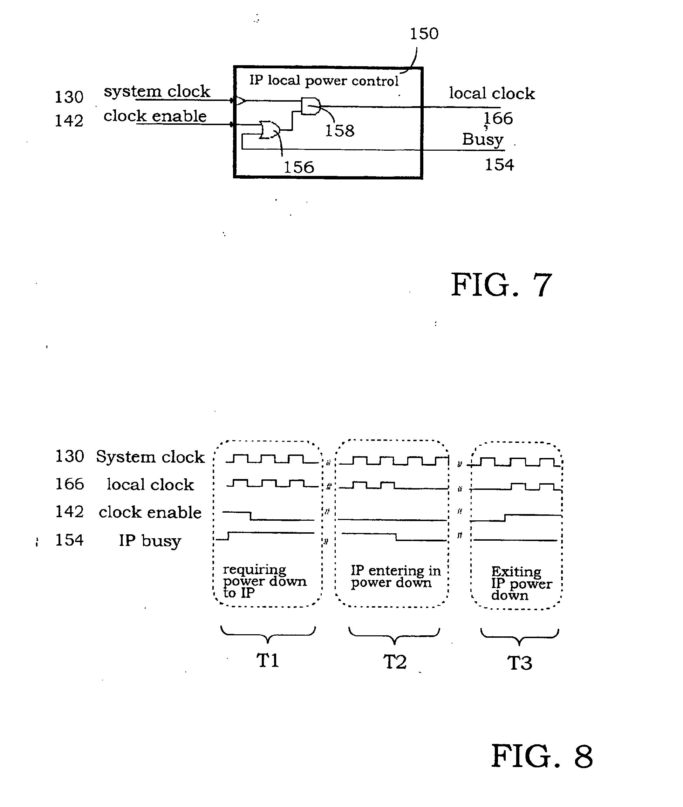

Figure 7 shows a block diagram of an example local power control 150. Included within the local power control 150 is a set of logic gates 156 and 158. In this particular embodiment of the local power control 150, the logic gate 156 is an OR gate and the logic gate 158 is an AND gate, although any combination of logic gates that produce the correct result is acceptable for the local power control and is within the scope of the invention.

In Figure 7, the OR gate 156 has a first input tied to the clock enable line 142 and a second input tied to the busy line 154. An output signal from the OR gate 156 is a first input to the AND gate 158, with the system clock 130 being a second input. The output of the AND gate 158 is the local clock signal 166, which is provided to the block logic 160 of the IP 112 (not shown in Figure 7). As can be seen from Figure 7, the local clock 166 will have the same frequency as the system clock 130, but will only be present when the output signal from the OR gate 156 is a 1 signal. Therefore, if either the clock enable signal 142 or the busy signal 154 is 1, the system clock 130 is passed as the local clock 166, otherwise, no clock signal is passed.

Examples of signals feeding the local power control 150 are shown in Figure 8, in three different time periods, t1, t2 and t3. In all of the periods t1, t2 and t3, the system clock 130 continues to operate at the system frequency. In a first time period t1, the signal on the busy line 154 changes from a 0 to a 1. This indicates that the IP block 112 is currently performing operations and must have a clock provided to it. Shortly after the busy line 154 changes, the clock enable line 142 changes from a 1 to a 0. This indicates that the power management system 140 of Figure 4 desires the IP block 112 to shut down. However, because the busy line 154 is still 1, the local power control 150 continues to provide the system clock 130 as the local clock 166.

In the period t2, the IP block 112 completes its current work and lowers the busy line 154 from 1 to 0. Once this occurs, because both the busy line 154 and the clock enable line 142 are 0, the output of the OR gate 156 (Figure 7) goes LOW, and therefore the output of the AND gate 158 also goes LOW. This causes the local clock 166 to cease, and the IP block 112 goes into powered down mode and draws no power.

In the period t3, the clock enable line 142 changes from 0 to 1, indicating that the power control block 140 will allow the IP block 112 to restart its operations. When the signal on the clock enable line 142 changes from 0 to 1, the output of the OR gate 156 immediately (after a negligible propagation delay) changes from 0 to 1. This, in turn, causes the AND gate 158 to again pass the system clock 130 as its output for the local clock 166, which is again fed to the IP block 112. Once the local clock 166 is present at the block logic 160 of the IP block 112, the block logic can resume operations when needed.

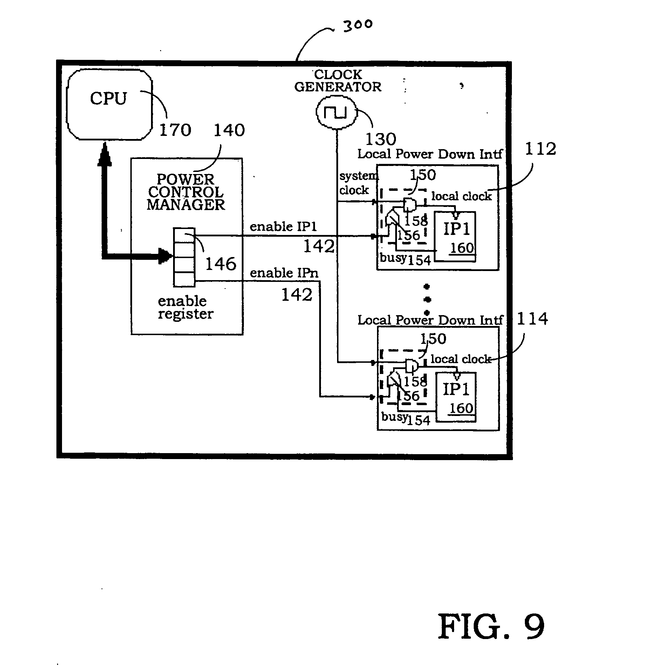

Figure 9 shows a top level architecture implementation of an SOC embodying the invention. Shown in that figure is a SOC 300, including IP blocks 112 and 114. Again, any number of IP blocks could be present within the SOC 300, and only two are shown for purposes of illustration. The system clock 130 is always in operation within the SOC 300, and is distributed as a first input to the AND gate 158 within the local power control 150 contained in each of the IP blocks 112, 114. Another input to the AND gate 158 is the output from the OR gate 156, which has a first input from the clock enable line 142 and a second input from the busy line 154. When either the signals on the clock request line 142 or the busy line 154 are 1, the system clock 130 is passed to the local clock 166 to drive the block logic 160. Otherwise, when neither of the signals are 1, no clock signal is passed to the local clock 166.

The power control manager 140 can include a register 146 that contains a memory storage location for each IP block 112, 114, etc. within the SOC 300. The register 146 is coupled to all of the clock enable lines 142 in the entire SOC 300. That is, each of the clock enable lines 142 will have a 0 or a 1 signal on it determined by the datum stored in the respective memory location of the register 446. Providing data on a signal line, such as the clock enable line 142 to match data stored in a memory location, and reading data from a signal line and storing it in a memory location are conventionally known.

In one embodiment, a CPU 170 can write data into the particular memory location of the register 146 for a particular IP block within the SOC 300, and the clock enable line 142 will be changed accordingly. In another embodiment, the CPU 170 would not be allowed to write data into the register 146, but could only read data already written there by the power control manager 140. In still another embodiment, programmable control could be given where it could be selected whether the power control manager 140 or the CPU 170, or both, could write data into the register 146, thereby controlling the shutdown of the respective IP block.

By storing the data of the state of the clock enable line in the register 146, the CPU 170 can check, via software, the current states of the IP blocks 112, 114, etc. in the SOC 300 by reading the data stored in the particular locations of the register 146. If the data indicated that the clock enable line 142 of a particular IP block 112, 114 was 1, the CPU would know that the IP block was provided the system clock 130 as its local clock 166. If the data indicated that the clock enable line was 0, the CPU 170 would know that the IP block is either in the shut down state, or completing its necessary operations before shutting down.

If a second register (not shown in Figure 9) would be used to store the status of each busy line 154, in a similar manner as is used to store the state of the clock enable line 142, the CPU 170 could know the state of the IP block exactly, by comparing signals read from the first and second registers to the chart shown below.

| First Reg. | Second Reg. | State of IP block |
|---|---|---|
| 0 | 0 | Shutdown |
| 0 | 1 | Busy, but will shut down at completion |
| 1 | 0 | Enabled (clock provided) but not busy |
| 1 | 1 | Enabled and busy |

This invention provides an easy and convenient way to safely switch off the clock to desired circuits within a System on Chip by providing a signal to the desired circuits and letting them finish their processing prior to shutting down. The implementation described above provides a further benefit in that control of such shutdowns can be executed by hardware and/or by software.

In an embodiment more than one system clock may be present and respectively structured to act as the local clock of selected ones of the plurality of circuit blocks.

## Claims

1. A power down circuit, comprising:
a plurality of circuit blocks (112, 114), each of said circuit blocks having a local clock (166);
a system clock (130) coupled to said plurality of circuit blocks (112, 114) and structured to act as said local clock (166) of selected ones of said plurality of circuit blocks;
a power control manager (140) coupled to said plurality of circuit blocks (112, 114) and structured to provide a signal (142), at least partially determining whether said system clock (130) will act as said local clock, (166) for each one of said circuit blocks (112, 114); **characterized in that** each one of the circuit blocks (112, 114) contains a local power control (150) structured to selectively maintain the system clock (130) acting as said local clock (166) of said block after said local power control (150) receives a signal to shut down (142) said block from said power control manager (140), if said block is busy when said signal to shut down said block is received.

2. A power down circuit according to Claim 1, further **characterized in that** said local power control (150) is a clock separation circuit coupled to the power control manager (140) and structured to prevent said system clock (130) from acting as said local clock (166) in said block that is receiving said shutdown signal (142) while in an idle state.

3. A power down circuit according to Claim 1, further **characterized in that** said power control manager (140) is coupled to said local power control (150) through a clock enable line (142).

4. A power down circuit according to Claim 3, further **characterized in that** said local power control (150) includes a logic circuit (156, 158) coupled to said clock enable line (142), a busy line (154), and said system clock (130), and said logic circuit is structured to generate said local clock (166) at an output of said logic circuit (156, 158) responsive to signals on said clock enable line (142), said busy line (154), and said system clock (130).

5. A power down circuit according to Claim 1, further **characterized in that** said power control manager (140) comprises a register (146) coupled to a clock enable line (142) of each of said circuit blocks (112, 114), and **in that** said register (146) stores data indicating states of one or more of the clock enable lines (142) respectively coupled to it.

6. A power down circuit according to Claim 5, **characterized in that** it further comprises a CPU coupled to said power control manager (140), the CPU able to determine said states of said circuit blocks (112, 114 by querying said register (146).

7. A power down circuit according to Claim 1, **characterized in that** more than one system clocks are present and are respectively structured to act as said local clock (166) of selected ones of said plurality of circuit blocks.

8. A method of powering down individual circuit blocks of a plurality of circuit blocks, comprising the steps of:
generating a system clock signal (130) that is coupled to said plurality of circuit blocks (112, 114) and can be used as respective local clocks (166) for said plurality of circuit blocks;
generating a plurality of signals (142) to selectively power down each one of said plurality of circuit blocks;
transmitting said signals to power down (142) said circuit blocks to a local power control (150) associated with each of said circuit blocks;
**characterized in that** the method further comprises:
accepting said signal to power down (142) at said local power control (150) in each of said circuit blocks (112, 114);
accepting a current state of said circuit block on a busy line (154) at said local power control (150); and
shutting down a circuit block, by preventing said system clock (130) from acting as said local clock (166) in said circuit block, if both said signal to power down (142) is received and said current state of said circuit block is not busy.

9. A method of powering down individual circuit blocks according to Claim 8, **characterized in that** said method further comprises preventing said shut down of said selected circuit blocks if either said signal to power down is not received, or if said selected circuit blocks are currently busy.

10. A method of powering down individual circuit blocks according to Claim 9 **characterized in that** preventing said system clock (130) from acting as said local clock (166) comprises disconnecting said system clock (130) from said local clock (310) only when those circuit blocks that have received said signal to power down (142) selected circuit blocks are idle.

## Patentansprüche

1. Energieabschaltschaltung, aufweisend:
eine Mehrzahl von Schaltungsblöcken (112, 114), wobei jeder der Schaltungsblöcke einen lokalen Taktgeber (166) hat;
einen Systemtaktgeber (130), der mit der Mehrzahl von Schaltungsblöcken (112. 114) gekoppelt und so strukturiert ist, dass er als der lokale Taktgeber (166) von ausgewählten der Mehrzahl von Schaltungsblöcken agiert;
eine Energiesteuerverwaltungseinrichtung (140), die mit der Mehrzahl von Schaltungsblöcken (112, 114) gekoppelt und so strukturiert ist, dass sie ein Signal (142) liefert, das mindestens teilweise bestimmt, ob der Systemtaktgeber (130) als der lokale Taktgeber (166) für jeden der Schaltungsblöcke (112, 114) agiert; **dadurch gekennzeichnet, dass** jeder der Schaltungsblöcke (112, 114) eine lokale Energiesteuerung (150) enthält, die so strukturiert ist, dass sie den Systemtakt (130), der als der lokale Takt (166) des Blocks agiert, aufrechterhält, nachdem die lokale Energiesteuerung (150) ein Signal für das Ausschalten des Blocks von der Energiesteuerverwaltungseinrichtung (140) empfängt (142), wenn der Block aktiv ist, wenn das Signal für das Ausschalten des Blocks empfangen wird.

2. Energieabschaltschaltung nach Anspruch 1, ferner **dadurch gekennzeichnet, dass** die lokale Energiesteuerung (150) eine Taktgebertrennschaltung ist, die mit der Energiesteuerverwaltungseinrichtung (140) gekoppelt und so strukturiert ist, dass der Systemtakt (130) daran gehindert wird, als der lokale Takt (166) in dem Block zu wirken, der das Ausschaltsignal (142) empfängt, während er in einem Ruhezustand ist.

3. Energieabschaltschaltung nach Anspruch 1, ferner **dadurch gekennzeichnet, dass** die Energiesteuerverwaltungseinrichtung (140) über eine Taktgeberaktivierungsleitung (142) mit der lokalen Energiesteuerung (150) gekoppelt ist.

4. Energieabschaltschaltung nach Anspruch 3, ferner **dadurch gekennzeichnet, dass** die lokale Energiesteuerung (150) eine Logikschaltung (156, 158) aufweist, die mit der Taktgeberaktivierungsleitung (142), einer Aktiv-Signal-Leitung (154) und dem Systemtaktgeber (130) gekoppelt ist, und die Logikschaltung so strukturiert ist, dass sie den lokalen Takt (166) an einem Ausgang der Logikschaltung (156, 158) erzeugt, der auf Signale auf der Taktgeberaktivierungsleitung (142), der Aktiv-Signal-Leitung (154) und auf den Systemtakt (130) reagiert.

5. Energieabschaltschaltung nach Anspruch 1, ferner **dadurch gekennzeichnet, dass** die Energiesteuerverwaltungseinrichtung (140) ein Register (146) aufweist, das mit einer Taktgeberaktivierungsleitung (142) von jedem der Schaltungsblöcke (112, 114) gekoppelt ist, und dass das Register (146) Daten speichert, die Zustände von einer oder mehreren der Taktgeberaktivierungsleitungen (142) anzeigen, die jeweils damit gekoppelt ist bzw. sind.

6. Energieabschaltschaltung nach Anspruch 5, **dadurch gekennzeichnet, dass** sie ferner eine CPU aufweist, die mit der Energiesteuerverwaltungsvorrichtung (140) gekoppelt ist, wobei die CPU dazu in der Lage ist, die Zustände der Schaltungsblöcke (112, 114) durch das Abfragen des Registers (146) zu bestimmen.

7. Energieabschaltschaltung nach Anspruch 1, **dadurch gekennzeichnet, dass** mehr als ein Systemtaktgeber vorhanden ist und diese jeweils so strukturiert sind, dass sie als lokale Taktgeber (166) von ausgewählten der Mehrzahl von Schaltungsblöcken agieren.

8. Verfahren zum Energieabschalten von individuellen Schaltungsblöcken einer Mehrzahl von Schaltungsblöcken, das folgende Schritte aufweist:
Erzeugen eines Systemtaktgebersignals (130), das mit der Mehrzahl von Schaltungsblöcken (112, 114) gekoppelt ist und als ein jeweiliger lokaler Takt (166) für die Mehrzahl der Schaltungsblöcke verwendet werden kann:
Erzeugen einer Mehrzahl von Signalen (142) für das selektive Energieabschalten von jedem der Mehrzahl von Schaltungsblöcken;
Senden der Signale für das Energieabschalten (142) der Schaltungsblöcke an eine lokalen Energiesteuerung (150), die jedem der Schaltungsblöcke zugeordnet ist; **dadurch gekennzeichnet, dass** das Verfahren ferner aufweist:
Entgegennehmen des Signals zum Energieabschalten (142) an der lokalen Energiesteuerung (150) in jedem der Schaltungsblöcke (112, 114);
Entgegennehmen eines gegenwärtigen Zustands des Schaltungsblocks auf einer Aktiv-Signal-Leitung (154) an der lokalen Energiesteuerung (150); und
Ausschalten eines Schaltungsblocks durch das Verbindern, dass der Systemtaktgeber (130) als der lokale Taktgeber (166) in dem Schaltungsblock agiert, wenn sowohl das Signal für das Energieabschalten (142) empfangen wird als auch der gegenwärtige Zustand des jeweiligen Schaltungsblocks nicht aktiv ist.

9. Verfahren für das Energieabschalten von individuellen Schaltungsblöcken nach Anspruch 8, **dadurch gekennzeichnet, dass** das Verfahren ferner das Verhindern des Ausschaltens der ausgewählten Schaltungsblöcke aufweist, wenn entweder das Signal für das Abschalten nicht empfangen wird oder wenn die ausgewählten Schaltungsblöcke gegenwärtig aktiv sind.

10. Verfahren für das Energieabschalten von individuellen Schaltungsblöcken nach Anspruch 9, **dadurch gekennzeichnet, dass** das Verhindern, dass der Systemtaktgeber (130) als der lokale Taktgeber (166) wirkt, das Trennen des Systemtaktgebers (130) von dem lokalen Taktgeber (310) nur dann, wenn diejenigen Schaltungsblöcke, welche das Signal für das Abschalten (142) der ausgewählten Schaltungsblöcke empfangen haben, im Ruhezustand sind, aufweist.

## Revendications

1. Circuit de mise hors tension, comprenant :
une pluralité de blocs de circuit (112, 114), chacun desdits blocs de circuit ayant une horloge locale (166);
une horloge système (130) couplée à ladite pluralité de blocs de circuit (112, 114) et structurée pour servir de ladite horloge locale (166) de blocs de circuit sélectionnés parmi ladite pluralité de blocs de circuit ;
un gestionnaire de commande d'alimentation électrique (140) couplé à ladite pluralité de blocs de circuit (112, 114) et structuré pour fournir un signal (142) déterminant au moins en partie si ladite horloge système (130) servira de ladite horloge locale (166) pour chacun desdits blocs de circuit (112, 114) ; **caractérisé en ce que** chacun des blocs de circuit (112, 114) contient une commande d'alimentation électrique locale (150) structurée pour maintenir de manière sélective l'horloge système (130) servant de ladite horloge locale (166) dudit bloc après que ladite commande d'alimentation électrique locale (150) a reçu un signal pour couper (142) ledit bloc dudit gestionnaire de commande d'alimentation électrique (140), si ledit bloc est occupé lorsque ledit signal pour couper ledit bloc est reçu.

2. Circuit de mise hors tension selon la revendication 1, **caractérisé en outre en ce que** ladite commande d'alimentation électrique locale (150) est un circuit de séparation d'horloqe couplé au gestionnaire de commande d'alimentation électrique (140) et structuré pour empêcher ladite horloge système (130) de servir de ladite horloge locale (166) dans ledit bloc qui est en train de recevoir ledit signal de coupure (142) tout en étant dans un état inactif.

3. Circuit de mise hors tension selon la revendication 1, **caractérisé en outre en ce que** ledit gestionnaire de commande d'alimentation électrique (140) est couplé à ladite commande d'alimentation électrique locale (150) par l'intermédiaire d'une ligne de mise sous tension d'horloge (142).

4. Circuit de mise hors tension selon la revendication 3, **caractérisé en outre en ce que** ladite commande d'alimentation électrique locale (150) comprend un circuit logique (156, 150) couplé à ladite ligne de mise sous tension d'horloge (142), une ligne occupée (154) et ladite horloge système (130), et ledit circuit logique est structuré pour générer ladite horloge locale (166) au niveau d'une sortie dudit circuit logique (156, 158) répondant aux signaux sur ladite ligne de mise sous tension d'horloge (142), ladite ligne occupée (154), et ladite horloge système (130).

5. Circuit de mise hors tension selon la revendication 1, **caractérisé en outre en ce que** ledit gestionnaire de commande d'alimentation électrique (140) comprend un registre (146) couplé à une ligne de mise sous tension d'horloge (142) de chacun desdits blocs de circuit (112, 114), et **en ce que** ledit registre (146) stocke des données indiquant les états d'une ou plusieurs des lignes de mise sous tension d'horloge (142) respectivement couplées à lui.

6. Circuit de mise hors tension selon la revendication 5, **caractérisé en ce qu'**il comprend en outre une unité centrale couplée audit gestionnaire de commande d'alimentation électrique (140), l'unité centrale étant capable de déterminer lesdits états desdits blocs de circuit (112, 114) en interrogeant ledit registre (146).

7. Circuit de mise hors tension selon la revendication 1, **caractérisé en ce que** plus d'une horloge système sont présentes et sont respectivement structurées pour servir de ladite horloge locale (166) de blocs de circuit sélectionnés parmi ladite pluralité de blocs de circuit.

8. Procédé de mise hors tension de blocs de circuit individuels d'une pluralité de blocs de circuit, comprenant les étapes consistant à :
générer un signal d'horloge système (130) qui est couplé à ladite pluralité de blocs de circuit (112, 7.14) et qui peut être utilisé en tant qu'horloges locales respectives (166) pour ladite pluralité de blocs de circuit ;
générer une pluralité de signaux (142) pour mettre hors tension de manière sélective chacun de ladite pluralité de blocs de circuit ;
transmettre lesdits signaux pour mettre hors tension (142) lendits blocs de circuit à une commande d'alimentation électrique locale (150) associée à chacun desdits blocs de circuit; **caractérisé en ce que** le procédé comprend en outre:
l'acceptation dudit signal pour mettre hors tension (142) au niveau de ladite commande d'alimentation électrique locale (150) dans chacun desdits blocs de circuit (112, 114) ;
l'acceptation d'un état actuel dudit bloc de circuit sur une ligne occupée (154) au niveau de ladite commande d'alimentation électrique locale (150) ; et
la coupure d'un bloc de circuit en empêchant ladite horloge système (130) de servir de ladite horloge locale (166) dans ledit bloc de circuit, si à la fois ledit signal pour mettre hors tension (142) est reçu et ledit état actuel dudit bloc de circuit n'est pas occupé.

9. Procédé de mise hors tension de blocs de circuit individuels selon la revendication 8, **caractérisé en ce que** ledit procédé comprend en outre le fait d'empêcher ladite coupure desdits blocs de circuit sélectionnés si ledit signal pour mettre hors tension n'est pas reçu, ou si lesdits blocs de circuit sélectionnés sont actuellement occupés.

10. Procédé de mise hors tension de blocs de circuit individuels selon la revendication 9, **caractérisé en ce que** le fait d'empêcher ladite horloge système (130) de servir de ladite horloge locale (166) comprend la déconnexion de ladite horloge système (130) par rapport à ladite horloge locale (310) uniquement lorsque les blocs de circuit qui ont reçu ledit signal pour mettre hors tension (142) les blocs de circuit sélectionnés sont inactifs.
